Europäisches Patentamt

European Patent Office

Office européen des brevets

(11) Numéro de publication : **0 432 065 B1**

(12) **FASCICULE DE BREVET EUROPEEN**

(19)

⑪

(45) Date de publication du fascicule du brevet :
**13.07.94 Bulletin 94/28**

(21) Numéro de dépôt : **90420523.4**

(22) Date de dépôt : **03.12.90**

(51) Int. Cl.$^5$ : **G21C 3/62**

(54) **Procédé d'obtention de pastilles combustibles d'UO2 à partir d'U métal, sans production d'effluent.**

(30) Priorité : **05.12.89 FR 8916737**

(43) Date de publication de la demande :
**12.06.91 Bulletin 91/24**

(45) Mention de la délivrance du brevet :
**13.07.94 Bulletin 94/28**

(84) Etats contractants désignés :
**BE DE FR GB**

(56) Documents cités :
**EP-A- 0 249 549
FR-A- 2 001 113
FR-A- 2 636 321
JAPANESE PATENT OFFICE, FILE SUPPLIER
JAPS, Tokyo, JP ; & JP-A-62 027 331 (MITSU-
BISHI METAL CORP.) 05-02-1987**

(73) Titulaire : **URANIUM PECHINEY
Tour Manhattan,
La Défense 2,
6 Place de l'Iris,
Cédex 21
F-92400 Courbevoie (FR)**

(72) Inventeur : **Feugier, André
Quartier Pilené
F-26300 Chatuzange-le-Goubet (FR)**
Inventeur : **Pirsoul, Michel
Graatakker 100
B-2300 Turnhout (BE)**

(74) Mandataire : **Des Termes, Monique et al
Société Brevatome
25, rue de Ponthieu
F-75008 Paris (FR)**

## Description

### Domaine technique

L'invention concerne un procédé de production de pastilles de combustibles nucléaires d'$UO_2$ fritté à partir d'uranium métal, provenant en particulier de l'enrichissement isotopique par laser, ledit procédé ne générant pas d'effluent liquide.

### Etat de la technique

Habituellement, en partant d'uranium métal, on obtient des pastilles combustibles frittées d'$UO_2$ de qualité nucléaire en utilisant un procédé dit par de voie humide mettant en oeuvre une succession d'opérations chimiques longues, coûteuses et génératrices d'effluents qu'il faut traiter et rejeter.

Elles consistent généralement, tout d'abord, à dissoudre le métal en milieu nitrique, puis à partir de la solution obtenue à précipiter l'uranium sous forme de diuranate, ou traiter ladite solution par une précipitation sélective, par exemple à l'aide de peroxyde d'hydrogène, puis à filtrer les bouillies obtenues, à sécher, calciner puis réduire l'oxyde obtenu en $UO_2$ à l'aide d'hydrogène ou d'ammoniac craqué. Chacune de ces opérations génère des résidus uranifères qu'il faut recycler et, de plus, on obtient des effluents, notamment à la purification et à la précipitation, qu'il faut désuranier et rejeter.

Avec la poudre d'$UO_2$ ainsi obtenue, il est généralement nécessaire d'opérer ensuite une granulation avant de procéder au pressage des pastilles puis à leur frittage pour obtenir des pastilles combustibles.

Par ailleurs du document JP-A-62 027331 (05.02.87) est connu un procédé d'obtention sûr et efficace de poudre de dioxyde d'uranium consistant à convertir l'uranium métallique en hydrure d'uranium par hydrogénation avant oxydation à l'aide de vapeur d'eau.

### Objet de l'invention

L'objectif de l'invention est de disposer d'un procédé d'obtention de pastilles combustibles frittées à partir d'uranium métal qui soit simple et direct, non producteur d'effluents liquides, conduisant à des poudres intermédiaires d'oxyde d'uranium directement coulables (c'est-à-dire ne nécessitant pas d'opération de conditionnement telle que granulation) et ayant une frittabilité suffisante dans des conditions standard pour obtenir des pastilles combustibles.

Un autre objectif est d'obtenir une poudre intermédiaire d'oxyde d'uranium utilisable pour faire, après mélange avec d'autres oxydes métalliques, par exemple de Pu, Th, Ce ou éléments neutrophages, des pastilles combustibles mixtes frittées, également sans granulation préalable.

Bien évidemment, les pastilles combustibles obtenues selon le procédé de l'invention sont conformes aux spécifications des combustibles nucléaires, en particulier, une densité frittée supérieure à 95% de la densité théorique et une stabilité thermique excellente; de plus, elles présentent, à l'état cru, une solidité équivalente voire améliorée.

### Description de l'invention

L'invention est un procédé d'obtention de pastilles combustibles nucléaires frittées à base d'$UO_2$ à partir d'uranium métal, ne générant pas d'effluent liquide et conduisant à des poudres intermédiaires d'oxyde d'U directement coulables et denses sans nécessiter d'opération particulière de conditionnement telle que granulation, caractérisé en ce qu'on oxyde l'uranium métal par un gaz oxydant à haute température pour obtenir un oxyde du type $U_3O_8$ que l'on concasse ou broie pour l'amener à une granulométrie moyenne d'environ 10 à 30 μm, ensuite:

. soit on le réduit chimiquement à l'état d'oxyde d'Uranium du type $UO_{2+x}$ puis l'active à l'aide d'au moins une opération de broyage fin par jet de gaz (Jet Mill) ou inversement;

. soit on l'active par un traitement thermique constitué d'une réduction et d'au moins un cycle d'oxydoréduction, la poudre d'$UO_{2+x}$ activée ainsi obtenue étant enfin directement mise en forme par compression puis frittée.

L'uranium métal de départ se trouve sous forme massive ou divisée et est oxydé en général par de l'air ou un mélange gazeux contenant de l'oxygène et éventuellement de la vapeur d'eau.

En atmosphère sèche, on ne dépasse pas en général une température de 600°C, au-delà de cette température, on obtient des blocs durs d'oxyde d'emploi ultérieur difficile. On préfère opérer entre 400 et 550°C.

En présence de vapeur d'eau, la vitesse d'oxydation augmente et on peut monter la température jusqu'à

2

EP 0 432 065 B1

800°C, mais on préfère opérer entre 600 et 750°C.

On broie alors grossièrement la poudre d'$U_3O_8$ obtenue jusqu'à une granulométrie moyenne d'environ 10 à 30 μm.

Dans le cas où la poudre obtenue est activée par broyage au jet de gaz, la réduction se fait à l'aide d'hydrogène pur ou dilué, par exemple: 50% d'hydrogène - 50% d'azote ou de $NH_3$ craqué, à une température supérieure à 550°C et de préférence comprise entre 600 et 700°C.

L'activation par broyage au jet de gaz peut se faire sur la poudre réduite et stabilisée sans que le rapport O/U soit sensiblement affecté.

Cette activation correspond à une augmentation de la surface spécifique de la poudre qui passe de 0,5 m2/g environ sur ledit U3O8 broyé grossièrement à une valeur d'au moins 1,5 m2/g et comprise de préférence entre 1,7 et 3,5 m2/g.

En alternative, on peut limiter le broyage par jet de gaz, et compléter l'activation par au moins un cycle d'oxydation-réduction effectué sur l'oxyde réduit.

Il est important de préciser qu'on utilise habituellement un broyage par jet de gaz à lit fluidisé, le dispositif ne comportant pas de plaque d'impact, ou dispositif analogue, sur lequel vient percuter le jet de poudre.

Pour effectuer ce broyage on dispose d'une enceinte au fond de laquelle sont situées plusieurs buses d'amenée de gaz propre (non chargé de poudre) à grande vitesse; les jets produits par ces buses convergent en un seul point; on alimente par ailleurs l'enceinte en poudre à broyer qui est mise en mouvement par les jets de gaz et qui est broyée au point de convergence par chocs inter-particulaires ou auto-attrition ; la suspension (ou aérosol) gaz-particule est évacuée de l'enceinte et séparée par tous moyens connus (par exemple par cyclonage), en récupérant d'une part la poudre broyée, d'autre part le gaz dépoussiéré qui est recyclé vers les buses après avoir été recomprimé.

Le dit broyage par jet de gaz à lit fluidisé permet ainsi d'éviter toute pollution de la poudre au cours du broyage, que pourrait provoquer l'emploi de plaques d'impact ou de buses traversées par un mélange de gaz et de poudre, d'éviter la production d'effluent gazeux le gaz vecteur étant recyclé, et d'obtenir une poudre broyée directement et totalement utilisable pour le frittage (aucun recyclage de poudre n'est nécessaire). Il est remarquable de noter que ce procédé a une telle efficacité qu'il permet d'obtenir "in fine" de façon inattendue un oxyde du type $UO_{2+x}$ directement et très facilement frittable, puisque la densité du produit final fritté dépasse généralement 96% de la densité théorique. Il faut noter que ce résultat est obtenu également même quand on opère le broyage avant la réduction, ce qui n'est généralement pas obtenu avec les procédés de l'art antérieur.

Dans le cas où ladite poudre d'$U_3O_8$ broyée grossièrement est activée à l'aide d'au moins un cycle oxydoréduction, elle est réduite à une température supérieure à 550°C de préférence comprise entre 600 et 700°C, sous atmosphère contenant de l'hydrogène, puis oxydée en présence d'un gaz contenant de l'oxygène à une température inférieure à 600°C, de préférence entre 400 et 500°C, puis réduite à nouveau comme précédemment. Si la température d'oxydation est trop élevée, on n'arrive pas, en effet, à obtenir une poudre finale d'activité suffisante, ayant une bonne aptitude au frittage, aptitude qui peut être évaluée par exemple par la surface spécifique BET.

Le choix des températures d'oxydation et de réduction permet de moduler la surface spécifique de la poudre finale d'oxyde d'uranium et on peut augmenter le nombre de cycles d'oxydo-réduction jusqu'à obtenir une poudre d'oxyde d'uranium ayant la surface spécifique désirée; en général, elle est supérieure à 1,5 m2/g et de préférence comprise entre 1,7 et 3,5 m2/g.

Dans les deux cas d'activation de poudre décrits ci-dessus, on obtient des poudres d'oxyde d'uranium denses, coulables, qui peuvent être pastillées dans des conditions habituelles, sans opération de granulation préalable, pour obtenir des pastilles crues de densité généralement comprise entre 5,50 et 6,90 g/cm3. Lesdites pastilles crues peuvent être frittées dans des conditions également habituelles, par exemple 3-4 h à 1700-1750°C sous atmosphère d'hydrogène ou d'azote et hydrogène; ou à 1100-1300°C sous atmosphère oxydante suivie alors d'une réduction à la même température en présence d'un gaz contenant de l'hydrogène ; les pastilles finales obtenues ont une densité d'au moins 95% de la densité théorique et habituellement supérieure à 96% de la densité théorique.

En comparaison, des poudres d'oxyde d'uranium obtenues par oxydation d'uranium métallique (sans ou avec présence de vapeur d'eau) et n'ayant pas été activées présentent une surface spécifique ne dépassant pas en général environ 1 m2/g et conduisent à des pastilles frittées finales dont la densité est en général inférieure à 90% de la densité théorique, quelle que soit la densité crue des pastilles utilisées, ce qui est insuffisant et inacceptable pour l'utilisation de ces pastilles combustibles frittées dans les réacteurs nucléaires.

Quand on veut préparer des pastilles combustibles d'oxydes mixtes, on mélange, avant pastillage, la poudre d'oxyde d'uranium activée à au moins une poudre d'oxyde métallique de granulométrie convenable par exemple du type oxyde de Pu, Th, Ce ou Gd, Hf,.....

3

Ainsi, l'invention permet d'obtenir des pastilles de combustible nucléaire frittées en partant d'uranium métal par un procédé très direct ne générant pas d'effluents liquides ni même, généralement, gazeux dont le stockage, le traitement et le rejet sont habituellement délicats et coûteux, et ne nécessitant pas d'étape de granulation des poudres d'oxyde d'uranium intermédiaires obtenues avant pastillage.

Un tel procédé dit par voie sèche est, de plus, particulièrement intéressant dans les fabrications de combustibles nucléaires car les problèmes de criticité sont ainsi simplifiés du fait de l'absence d'eau.

L'activation par oxydo-réduction présente l'avantage par rapport au broyage par jet de gaz de simplifier les problèmes de traitement des effluents gazeux, le volume des gaz à traiter étant nettement plus faible et leur épuration plus facile, car ils ne contiennent pas ou très peu de poudre d'oxyde d'uranium en suspension.

Les pastilles crues obtenues par ce procédé présentent, par ailleurs, une solidité améliorée.

Exemple 1

Cet exemple illustre les deux variantes d'activation pratiquées au cours du procédé selon l'invention.

On a oxydé un barreau d'uranium de diamètre 15 mm et 10 cm de long, en présence d'air à une température de 600°C pendant 8 h.

On a obtenu une poudre grossière d'$U_3O_8$ que l'on a concassée jusqu'à obtenir une poudre de granulométrie moyenne de 27 $\mu$m environ.

Cette poudre a été divisée en deux parties:

- la première partie (essai 1) a été d'abord activée par passage dans un broyeur à jet de gaz à lit fluidisé (du type Jet Mill) pour donner une poudre de granulométrie moyenne 2 $\mu$m environ

On l'a ensuite réduite en $UO_2$ par un mélange $H_2$ (20 l/min) et $N_2$ (8 l/min) à 600°C pendant 5 h.

La poudre d'$UO_2$ obtenue a été passivée à 50°C pendant 3 h 30 par un mélange air-azote enrichi progressivement en air jusqu'à 37% en volume; sa surface spécifique (BET) est alors de 1,74 $m^2$/g, sa granulométrie moyenne de 2,1 $\mu$m [granulométrie laser effectuée à l'aide d'un appareil CILAS (Marque déposée)] et sa masse spécifique apparente de 1,48 g/cm3.

La poudre d'oxyde d'uranium obtenue ayant les caractéristiques décrites ci-dessus a été mise en forme par compactage puis frittée à 1740°C pendant 3 h sous hydrogène.

Les résultats de densité des pastilles frittées sont compris entre 96,62 et 97,11% de la densité théorique de l'oxyde d'uranium et figurent dans le tableau 1 (essai 1)

- la deuxième partie (essai 2) de la poudre d'$U_3O_8$ concassée a été d'abord réduite à l'état $UO_2$ et passivée dans les mêmes conditions que précédemment, puis activée au broyeur à jet de gaz dans les conditions suivantes:

. Pression de broyage: 6 bars relatifs en fin d'essai

. Vitesse de rotation de la turbine: 15000 tpm

La poudre d'oxyde d'uranium obtenue a une surface spécifique de 2,04 m2/g, une granulométrie moyenne de 0,8 $\mu$m (granulomètre laser CILAS) et une masse spécifique apparente de 2,03 g/cm3.

La poudre a été mise en forme et frittée dans les mêmes conditions que dans l'essai 1. Les résultats de densité des pastilles frittées sont compris entre 96,85 et 97,03% de la densité théorique et figurent dans le tableau 1 (essai 2)

| TABLEAU 1 | | | | | |
|---|---|---|---|---|---|
| N° Essai | UO$_2$ avant compactage: Surf.spécif m2/g | Pression de compactage MPa | t/cm2 | Densité des pastilles crues g/cm3 | Densité des pastilles frittées % de la densité théorique |
| 1 | 1,74 | 290 | 2,96 | 6,45 | 96,62 |
| | | 368 | 3,75 | 6,65 | 96,95 |
| | | 425 | 4,34 | 6,81 | 97,11 |
| 2 | 2,04 | 290 | 2,96 | 6,49 | 96,85 |
| | | 368 | 3,75 | 6,65 | 96,94 |
| | | 425 | 4,34 | 6,78 | 97,03 |

On note avantageusement dans cet exemple que les pressions de compactage sont particulièrement basses, et correspondent, néanmoins, à des densités crues et frittées très supérieures à la normale.

Exemple 2

Dans cet exemple, on comparera des pastilles obtenues sans traitement d'activation et avec traitement d'activation. Le tableau 2 regroupe les résultats.

Tout d'abord, on a oxydé à l'air un barreau d'uranium métal à une température comprise entre 450 et 550°C pendant 8 h.

Cette poudre a été concassée sommairement à 10 μm comme décrit dans l'exemple 1, puis divisée en 2 parties (lots 1 et 2)

- La première partie (lot 1) a été réduite sous hydrogène-azote (50%-50%) à 600°C pendant 4,5 heures, puis criblée à 250 μm. Sa surface spécifique est de 1,05 m2/g. Sa granulométrie moyenne est de 7 μm (granulomètre par sédimentation type Sédigraph - Marque déposée) et sa masse spécifique apparente de 2,06 g/cm3.

La poudre d'oxyde d'uranium ainsi obtenue a été divisée en deux autres lots :
  . le lot 3 a été mis en forme directement sans granulation, puis fritté sous hydrogène à 1700°C pendant 4 h. Les densités des pastilles frittées sont comprises entre 87,35 et 89,26% de la densité théorique, malgré de bonnes densités crues (Tableau 2 - essai 3)
  . le lot 4 a été granulé puis mis en forme et fritté dans les mêmes conditions que le lot 3. On s'est mis ainsi dans les meilleures conditions possibles pour obtenir de bonnes densités des pastilles frittées. Lesdites densités frittées sont comprises entre 89,26 et 89,58% de la densité théorique (Tableau 2 - essai 4). Elles sont en progrès, comme prévu, sur les précédentes, mais sont encore trop faibles.
- La deuxième partie (lot 2) de la poudre d'U$_3$O$_8$ grossièrement broyée a été tout d'abord réduite à l'état UO$_2$ par un traitement sous hydrogène identique à celui pratiqué pour les les lots 3 et 4. Puis on l'a activée à l'aide d'un traitement d'oxydation-réduction dans les conditions suivantes :

```
oxydation : température          400° C

            atmosphère           air (10 m3/h)

            temps de séjour      6 h.


réduction : température          600° C

            atmosphère           H₂(3 m3/h)+N₂(3 m3/h)

            temps de séjour      6 h.
```

La poudre obtenue présente une granulométrie moyenne de 4,8 µm (granulomètre Sédigraph), une surface spécifique BET de 3,49 m2/g et une masse spécifique apparente de 1,38 g/cm3.

Elle a ensuite été mise en forme directement sans granulation préalable, puis frittée comme décrit plus haut (H2, 1700°C, 4 h.). Les densités frittées obtenues sont comprises entre 95,83 et 96,73% de la densité théorique (Tableau 2 - essai 5).

Dans le tableau 2, figure également la solidité des pastilles crues, qui ont généralement la forme de cylindres de faible hauteur. Le test consiste à insérer la pastille entre deux mâchoires planes parallèles prenant appui sur deux génératrices de la pastille diamétralement opposées et à mesurer la force nécessaire à la rupture, dont la valeur figure dans le Tableau 2.

| | UO$_2$ avant compactage: Surface spécifique m2/g | Pression de compactage MPa (t/cm2) | Densité pastilles crues g/cm3 | Densité pastilles frittées % densité théorique | Solidité pastilles crues daN |
|---|---|---|---|---|---|
| N° essai | | | | | |
| 3–1 | 1,05 | 200 (2,04) | 5,60 | 87,35 | 3,4 |
| 3–2 | 1,05 | 242 (2,47) | 5,80 | 88,17 | 4,3 |
| 3–3 | 1,05 | 303 (3,09) | 5,80 | 88,92 | 7,0 |
| 3–4 | 1,05 | 345 (3,52) | 6,10 | 89,26 | 10,0 |
| 4–1 | 1,05 | 187 (1,91) | 5,60 | 89,26 | 3,4 |
| 4–2 | 1,05 | 229 (2,34) | 5,80 | 89,47 | 4,6 |
| 4–3 | 1,05 | 290 (2,96) | 6,00 | 89,34 | 6,5 |
| 4–4 | 1,05 | 332 (3,39) | 6,20 | 89,58 | 7,5 |
| 5–1 | 3,49 | 479 (4,89) | 5,50 | 95,87 | 58,3 |
| 5–2 | 3,49 | 526 (5,37) | 5,80 | 96,30 | 92,6 |
| 5–3 | 3,49 | 588 (6,00) | 6,00 | 96,49 | 115,8 |
| 5–4 | 3,49 | 684 (6,98) | 6,20 | 96,73 | 124,2 |

TABLEAU 2

La poudre de l'exemple 2 - essai 5 a conduit, selon l'invention, à des pastilles ayant des caractéristiques remarquables :

. Les pastilles crues sont très résistantes, ce qui est un avantage pour la manutention de ces produits;

. les densités frittées sont en majorité supérieures à 96%, et dans tous les cas dépassent nettement le minimum requis, alors que, sans activation, on n'obtient pas 90% de la densité théorique (même avec une opération de granulation).

## Revendications

1. Procédé d'obtention de pastilles combustibles nucléaires à base d'UO2 à partir d'uranium métal, procédé ne générant pas d'effluent liquide et conduisant à des poudres intermédiaires d'oxyde d'uranium denses et coulables sans opération particulière de conditionnement telle que granulation, caractérisé en ce qu'on oxyde l'uranium métal de départ par un gaz oxydant à haute température pour obtenir un oxyde U$_3$O$_8$, que l'on concasse ou broie pour obtenir une poudre de granulométrie moyenne d'environ 10 à 30 μm, ladite poudre étant soit réduite chimiquement en UO$_2$, puis activée (ou inversement: activée puis réduite) à l'aide d'au moins une opération de broyage fin, soit réduite chimiquement en UO$_2$ puis activée à l'aide d'au moins un cycle d'oxydation-réduction, avant d'être directement mise en forme par pressage et frittée.

2. Procédé selon la revendication 1 caractérisé en ce que l'uranium métal est oxydé par de l'air ou de l'oxygène pur ou dilué par un gaz neutre à une température ne dépassant pas 600°C et de préférence comprise entre 400 et 550°C.

3. Procédé selon l'une quelconque des revendications 1 et 2, caractérisé en ce que l'uranium métal est oxydé en présence de vapeur d'eau à une température ne dépassant pas 800°C et de préférence comprise entre 600 et 750°C

4. Procédé selon l'une quelconque des revendications 1 à 3, caractérisé en ce que le broyage fin est un broyage par jet de gaz à lit fluidisé.

5. Procédé selon l'une quelconque des revendications 1 à 4, caractérisé en ce que la phase d'oxydation d'un cycle d'oxydation-réduction est faite à l'aide d'air ou d'oxygène pur ou dilué par un gaz neutre à une température ne dépassant pas 600°C et de préférence comprise entre 400 et 500°C.

6. Procédé selon l'une quelconque des revendications 1 à 5, caractérisé en ce que la poudre d'oxyde d'uranium activée présente une surface spécifique comprise entre 1,7 et 3,5 m2/g.

7. Procédé selon l'une quelconque des revendications 1 à 6, caractérisé en ce qu'on mélange à la poudre d'UO$_2$ activée, avant mise en forme, un oxyde métallique pour obtenir des pastilles combustibles d'oxydes mixtes.


## Patentansprüche

1. Verfahren zur Herstellung von Kernbrennstofftabletten auf der Basis von UO$_2$ ausgehend von Uranmetall, wobei das Verfahren keinen flüssigen Abgang erzeugt und zu dichten und ohne besondere Aufbereitungsmaßnahme, wie eine Granulation, fließbaren Zwischenpulvern aus Uranoxid führt, dadurch gekennzeichnet, daß man das Ausgangsuranmetall durch ein oxidierendes Gas bei hoher Temperatur oxidiert, um ein U$_3$O$_8$ Oxid zu erhalten, das man grobzerkleinert und fein mahlt, um ein Pulver mit einer mittleren Granulometrie von ungefähr 10 bis 30 μm zu erhalten, wobei das genannte Pulver entweder chemisch zu UO$_2$ reduziert, dann mit Hilfe wenigstens eines Feinmahlvorganges aktiviert (oder umgekehrt: aktiviert dann reduziert) wird, oder chemisch zu UO$_2$ reduziert, dann mit Hilfe wenigstens eines Oxidations-Reduktions-Zyklus aktiviert wird, bevor es unmittelbar durch Pressen und Sintern in Form gebracht wird.

2. Verfahren nach Anspruch 1, **dadurch gekennzeichnet,** daß das Uranmetall durch Luft oder durch reinen oder mit einem neutralen Gas verdünnten Sauerstoff bei einer Temperatur oxidiert wird, die 600° C nicht überschreitet und vorzugsweise zwischen 400 und 550° C liegt.

3. Verfahren nach einem der Ansprüche 1 und 2, **dadurch gekennzeichnet,** daß das Uranmetall in Gegenwart von Wasserdampf bei einer Temperatur oxidiert, die 800° C nicht überschreitet und vorzugsweise zwischen 600 und 750° C liegt.

4. Verfahren nach einem der Ansprüche 1 bis 3, **dadurch gekennzeichnet,** daß das Feinmahlen ein Mahlen durch einen Gasstrahl mit Fließbett ist.

5. Verfahren nach irgendeinem der Ansprüche 1 bis 4, **dadurch gekennzeichnet,** daß die Oxidationsphase eines Oxidations-Reduktions-Zyklus mit Hilfe von Luft oder reinem oder durch ein neutrales Gas verdünntem Sauerstoff bei einer Temperatur durchgeführt wird, die 600° C nicht überschreitet und vorzugsweise zwischen 400 und 500° C liegt.

6. Verfahren nach irgendeinem der Ansprüche 1 bis 5, **dadurch gekennzeichnet,** daß das aktivierte Uranoxidpulver eine spezifische Oberfläche aufweist, die zwischen 1,7 und 3,5 m2/g liegt.

7. Verfahren nach irgendeinem der Ansprüche 1 bis 6, **dadurch gekennzeichnet,** daß man das aktivierte Pulver aus UO$_2$ vor dem Formen mit einem Metalloxid mischt, um Kernbrennstofftabletten aus Mischoxiden zu erhalten.

**Claims**

1. A process for obtaining combustible nuclear pellets having a base of $UO_2$ made from metal uranium, a process which does not produce any liquid effluent and leads to intermediate powders of uranium oxide which are compact and castable without any special conditioning phase such as granulation, characterised in that the original metal uranium  is oxidised by an oxidising gas at a high temperature in order to obtain an oxide $U_3O_8$ which is crushed or ground in order to obtain a powder with an average size grading of approximately 10 to 30 µm, the said powder being either chemically reduced to $UO_2$ then activated (or inversely: activated then reduced) with the aid of at least one fine grinding phase, or chemically reduced to $UO_2$ then activated with the aid of at least one oxidation-reduction cycle, prior to being directly shaped by pressing and sintered.

2. A process according to claim 1, characterised in that the metal uranium is oxidised by air or by pure oxygen or oxygen diluted by a neutral gas at a temperature not exceeding 600° C and preferably lying between 400 and 550° C.

3. A process according to any one of claims 1 and 2, characterised in that the metal uranium is oxidised in the presence of water vapour at a temperature not exceeding 800° C and preferably lying between 600 and 750° C.

4. A process according to any one of claims 1 to 3, characterised in that the fine grinding is grinding process by a jet of gas on a fluidised bed.

5. A process according to any one of claims 1 to 4, characterised in that the oxidation phase of an oxidation-reduction cycle is carried out with the aid of air or pure oxygen or oxygen diluted by a neutral gas at a temperature not exceeding 600° C and preferably lying between 400 and 500° C.

6. A process according to any one of claim 1 to 5, characterised in that the activated uranium oxide powder has a specific surface area of between 1.7 and 3.5 m2/g.

7. A process according to any one of claims 1 to 6, characterised in that a metallic oxide is mixed with the activated $UO_2$ powder, prior to its being shaped, in order to obtain combustible pellets of mixed oxides.